# EUROPÄISCHE PATENTANMELDUNG

(11) **EP 2 535 690 A1**
(43) Veröffentlichungstag der Anmeldung: **19.12.2012**
(21) Anmeldenummer: 11169801.5
(22) Anmeldetag: 14.06.2011
(51) Int. Cl.: G01K 11/32, G01K 1/14

(54) **Verfahren zum Ermitteln einer Temperatur in einer Wicklung von Teilleitern einer elektrischen Maschine**

(71) Anmelder: SIEMENS AKTIENGESELLSCHAFT, 80333 München (DE)
(72) Erfinder: Röding, Roland, 99755 Ellrich (DE); Adolf, Haiko, 99099 Erfurt (DE); Banda, Marcus, 99084 Erfurt (DE); Keyßner, Norbert, 99099 Erfurt (DE); Trefflich, Lothar, 99195 Eckstedt (DE)

(57) **Zusammenfassung**

Ein Verfahren zum Ermitteln einer Temperatur an einem vorherbestimmten Ort in einer Wicklung von Teilleitern (2) einer elektrischen Maschine, die jeweils mit einer elektrischen Teilleiterisolation (3) ummantelt sind, weist folgende Schritte auf: Vorherbestimmen des Orts zwischen einem der Teilleiter (2) und der zugehörigen Teilleiterisolation (3); Anordnen einer Glasfaser (5) mit einem Sensormaterialstück (9) in der Wicklung, wobei das Sensormaterialstück (9) an den vorherbestimmten Ort angebracht wird und die optischen Eigenschaften des Sensormaterialstücks (9) temperaturabhängig und nicht-dehnungsbeeinflusst sind; Belichten des Sensormaterialstücks (9) via die Glasfaser (5), so dass nach einer Wechselwirkung mit dem Sensormaterialstück (9) Licht von dem Sensormaterialstück (9) emittiert wird; Erfassen des Spektrums des Lichts; Ermitteln der Temperatur an dem vorherbestimmten Ort mit dem Spektrum.

## Beschreibung

Die Erfindung betrifft ein Verfahren zum Ermitteln einer Temperatur in einer Wicklung von Teilleitern einer elektrischen Maschine.

In einer elektrischen Maschine mit einer hohen Klemmenleistung, wie z.B. ein Kraftwerksgenerator, werden herkömmlich elektrische Leiter mit einer hohen elektrischen Leitfähigkeit eingebaut. Vergrößert man den Querschnitt eines elektrischen Leiters, so steigt die Leitfähigkeit aufgrund von in dem Leiter auftretenden Wirbelströmen jedoch nicht in gleichem Maße an. Deswegen ist in der elektrischen Maschine ein sogenannter Roebelstab verwendet, der eine Transposition von elektrischen Teilleitern aufweist, wobei jeder der Teilleiter von einer elektrischen Teilleiterisolation ummantelt ist. Die Wicklung kann dabei zusätzlich von einer Hauptisolation ummantelt sein.

Im Betrieb der Maschine erwärmt sich der Roebelstab, insbesondere durch den durch ihn fließenden Strom. Zu einer Verlängerung der Lebensdauer des Roebelstabes wird der Roebelstab so ausgelegt, dass hohe Temperaturen vermieden werden. Dazu ist eine Kenntnis der Temperatur des Roebelstabes im Betrieb der Maschine erforderlich, insbesondere ist die Kenntnis der Temperatur des heißesten Orts, dem sogenannten Heißpunkt, erforderlich. Der Heißpunkt befindet sich zwischen dem heißesten Teilleiter und seiner Teilleiterisolation.

Zum Messen der Temperatur des Roebelstabes stehen verschiedene Verfahren zu Verfügung. Herkömmlich wird ein elektrisches Widerstandsthermometer oder ein Thermoelement in den Zwischenschieber der Wicklung eingebracht. Jedoch sind das Widerstandsthermometer oder das Thermoelement nicht geeignet um die Temperatur direkt an dem Teilleiter zu messen, sondern sie werden lediglich eingesetzt, um Temperaturen innerhalb der Nut, aber außerhalb der Hauptisolation zu messen.

Alternativ wird eine Glasfaser verwendet, welche elektrisch nicht leitend ist. Dabei wird eine Glasfaser verwendet, an dessen Ende ein sogenannter Bragg-Sensor angeordnet ist. In dem Bragg-Sensor ist mittels eines Lasers eine periodische Modulation der Brechzahl in die Glasfaser eingeschrieben. Diese periodische Modulation wirkt wie ein Interferenzfilter, bei dem nach Belichten des Interferenzfilters Licht mit einem vorherbestimmten Spektrum zurückreflektiert wird. Die Zentralwellenlänge des Spektrums hängt von dem Abstand von zwei benachbarten Brechzahlmaxima in der periodischen Modulation ab. Bei einer Temperaturerhöhung dehnt sich der Bragg-Sensor aus, wodurch sich der Abstand der Brechzahlmaxima vergrößert und sich die Zentralwellenlänge des Spektrums verändert.

An dem dem Bragg-Sensor abgewandten Ende der Glasfaser ist eine Lichtquelle angeordnet, mit welcher der Bragg-Sensor belichtet wird. Das Spektrum des von dem Bragg-Sensor zurückreflektierten Lichts wird gemessen und aus dem Spektrum wird die Temperatur des Bragg-Sensors bestimmt. Wird der Bragg-Sensor an einen Teilleiter aus Kupfer angebracht, so entsteht aufgrund der Temperaturerhöhung eine Differenzdehnung zwischen dem Sensor und dem Teilleiter, weil Glas und Kupfer unterschiedlichen Wärmeausdehnungskoeffizienten aufweisen. Die Differenzspannung stört die Messung, so dass die Genauigkeit der Messung stark abnimmt. Abhilfe schafft den Bragg-Sensor von einer Glaskapillare zu ummanteln, in der sich der Bragg-Sensor ausdehnen kann, ohne äußere Spannungen zu erfahren. Der Bragg-Sensor zusammen mit der Glaskapillare hat eine so große Erstreckung, dass er nicht zwischen dem Teilleiter und der Teilleiterisolation eingebracht werden kann, sondern er wird in die Wicklung zwischen den Teilleiterisolationen eingebracht. Dadurch beträgt der Abstand des Bragg-Sensors zu dem Heißpunkt etwa 2 mm bis 3 mm. Als Folge nimmt die Genauigkeit der Messung der Temperatur des Heißpunktes stark ab.

Aufgabe der Erfindung ist es, ein Verfahren zum Ermitteln einer Temperatur an einem vorherbestimmten Ort in er Wicklung von Teilleitern einer elektrischen Maschine zu schaffen, wobei das Verfahren eine hohe Genauigkeit hat.

Das erfindungsgemäße Verfahren zum Ermitteln einer Temperatur an einem vorherbestimmten Ort in einer Wicklung von Teilleitern einer elektrischen Maschine, die jeweils mit einer elektrischen Teilleiterisolation ummantelt sind, weist folgende Schritte auf: Vorherbestimmen des Orts zwischen einem der Teilleiter und der zugehörigen Teilleiterisolation; Anordnen einer Glasfaser mit einem Sensormaterialstück in der Wicklung, wobei das Sensormaterialstück an den vorherbestimmten Ort angebracht wird und die optischen Eigenschaften des Sensormaterialstücks temperaturabhängig und nicht-dehnungsbeeinflusst sind; Belichten des Sensormaterialstücks via die Glasfaser, so dass nach einer Wechselwirkung mit dem Sensormaterialstück Licht von dem Sensormaterialstück emittiert wird; Erfassen des Spektrums des Lichts; Ermitteln der Temperatur an dem vorherbestimmten Ort mit dem Spektrum. Das erfindungsgemäße Verfahren erlaubt es vorteilhaft, die Temperatur an einem Heißpunkt der Wicklung und im Betrieb der elektrischen Maschine zu messen.

Das Sensormaterialstück wird bevorzugt von dem Teilleiter kontaktiert. Ferner ist das Sensormaterialstück bevorzugt an dem Ende der Glasfaser befestigt, das an dem vorherbestimmten Ort angeordnet wird. Das Sensormaterialstück weist bevorzugt einen Halbleiter, insbesondere einen Galliumarsenidkristall, auf. Galliumarsenid ist ein Halbleiter, welcher sich durch eine geringe Energiedifferenz zwischen dem Valenzband und dem Leitungsband, der sogenannten Bandlücke, auszeichnet. Licht, dessen Energie höher als die Energiedifferenz der Bandlücke ist, wird unter Anheben eines Elektrons vom Valenzband in das Leitungsband absorbiert. An dem dem Sensor abgewandten Ende der Glasfaser ist eine Lichtquelle angeordnet, mit welcher der Galliumarsenidkristall belichtet wird. Das Spektrum von dem Galliumarsenidkristall zurückreflektierten Licht wird gemessen. Dabei zeigt sich, dass Licht mit kürzeren Wellenlängen als eine sogenannte Bandkante absorbiert wird. Die spektrale Lage der Bandkante hängt von der Temperatur ab und verschiebt sich mit ca. 0,4 nm/K. Aus dem Spektrum wird die Bandkante und daraus die Temperatur des Galliumarsenidkristalls bestimmt.

Der vorherbestimmte Ort ist bevorzugt ein vorherberechneter Heißpunkt der Wicklung. Bevorzugtermaßen wird das Sensormaterialstück in einer Aussparung angebracht, die in einem der Teilleiter vorgesehen ist. Ferner ist die Glasfaser bevorzugt in einer Ummantelung gelagert. Außerdem wird bevorzugt eine Mehrzahl an Orten verteilt über die Länge der Wicklung vorherbestimmt.

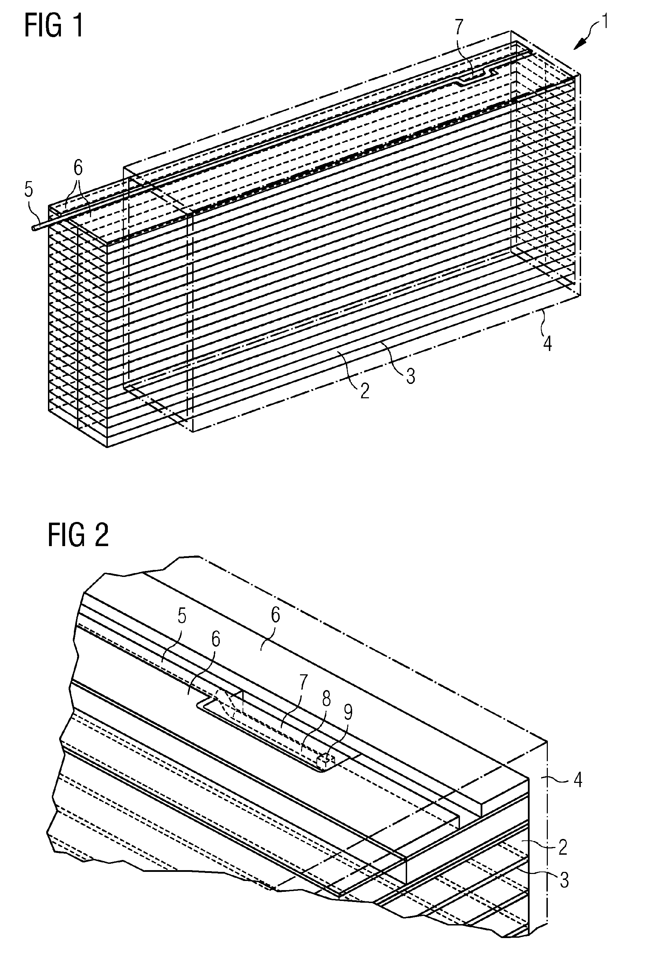

Im Folgenden wird anhand der beigefügten schematischen Zeichnungen die Erfindung näher erläutert. Die Figur1 und die Figur 2 verschiedene Ansichten von zeigen perspektivische Darstellungen eines Schnitts eines Roebelstabes mit einer nach dem erfindungsgemäßen Verfahren vorgesehenen Glasfaser.

Wie es aus Figur 1 ersichtlich ist, weist der Roebelstab 1 elektrische Teilleiter 2 mit einem rechteckigen Querschnitt auf, die jeweils von einer Teilleiterisolation 3 ummantelt sind. Die Teilleiter 2 sind übereinander und nebeneinander gestapelt, wobei die Gesamtheit der Teilleiter von einer Hauptisolation 4 ummantelt ist. Zwischen der Hauptisolation 4 und dem obersten Teilleiter 2 ist eine Glasfaser 5 zwischen zwei Abstandshaltern 6 angeordnet. Die Glasfaser ist dabei in Längsrichtung des Roebelstabes 1 geführt. Im obersten Teilleiter 2 ist eine Aussparung 7 vorgesehen. Wie es aus Figur 2 ersichtlich ist, ist das Ende der Glasfaser 8 in der Aussparung 7 angebracht. Am Ende der Glasfaser 8 ist ein Sensormaterialstück 9 angeordnet.

Anhand eines Beispiels wird im Folgenden das erfindungsgemäße Verfahren näher erläutert.

Eine Mehrzahl an Heißpunkten des Roebelstabes 1 wird vorherberechnet. An jedem der vorherberechneten Heißpunkte wird in den Teilleitern 2 eine Aussparung 7 vorgesehen. Für jeden der Heißpunkte ist je eine Glasfaser 5 vorgesehen, an dessen Ende 8 ein Galliumarsenidkristall angeordnet ist. Mittels Abstandshalter 6 werden die Glasfasern 5 in dem Roebelstab geführt, wobei die Galliumarsenidkristalle in den Aussparungen 7 angeordnet sind. Auf den Roebelstab 1 wird anschließend die Hauptisolation 4 aufgebracht. Im Betrieb der elektrischen Maschine, in die der Roebelstab 1 eingebaut ist, werden die Galliumarsenidkristalle von den gegenüberliegenden Enden der Glaserfasern 5 aus belichtet. Die Spektren des von den Galliumarsenidkristallen zurückreflektierten Lichts werden gemessen. Aus den gemessenen Spektren werden die Temperaturen der Galliumarsenidkristalle bestimmt.

## Patentansprüche

1. Verfahren zum Ermitteln einer Temperatur an einem vorherbestimmten Ort in einer Wicklung von Teilleitern (2) einer elektrischen Maschine, die jeweils mit einer elektrischen Teilleiterisolation (3) ummantelt sind, mit den Schritten:
- Vorherbestimmen des Orts zwischen einem der Teilleiter (2) und der zugehörigen Teilleiterisolation (3);
- Anordnen einer Glasfaser (5) mit einem Sensormaterialstück (9) in der Wicklung, wobei das Sensormaterialstück (9) an den vorherbestimmten Ort angebracht wird und die optischen Eigenschaften des Sensormaterialstücks (9) temperaturabhängig und nicht-dehnungsbeeinflusst sind;
- Belichten des Sensormaterialstücks (9) via die Glasfaser (5), so dass nach einer Wechselwirkung mit dem Sensormaterialstück (9) Licht von dem Sensormaterialstück (9) emittiert wird;
- Erfassen des Spektrums des Lichts;
- Ermitteln der Temperatur an dem vorherbestimmten Ort mit dem Spektrum.

2. Verfahren gemäß Anspruch 1,
wobei das Sensormaterialstück (9) unmittelbar von dem Teilleiter (2) kontaktiert wird.

3. Verfahren gemäß Anspruch 1 oder 2,
wobei das Sensormaterialstück (9) an dem Ende der Glasfaser (8) befestigt ist, das an dem vorherbestimmten Ort angeordnet wird.

4. Verfahren gemäß einem der Ansprüche 1 bis 3,
wobei das Sensormaterialstück (9) einen Halbleiter, insbesondere einen Galliumarsenidkristall, aufweist.

5. Verfahren gemäß einem der Ansprüche 1 bis 4,
wobei der vorherbestimmte Ort ein vorherberechneter Heißpunkt der Wicklung ist.

6. Verfahren gemäß einem der Ansprüche 1 bis 5,
wobei das Sensormaterialstück (9) in einer Aussparung (7) angebracht wird, die in einem der Teilleiter (2) vorgesehen ist.

7. Verfahren gemäß einem der Ansprüche 1 bis 6,
wobei die Glasfaser (5) in einer Ummantelung gelagert ist.

8. Verfahren gemäß einem der Ansprüche 1 bis 7,
wobei eine Mehrzahl an Orten verteilt über die Länge der Wicklung vorherbestimmt wird.
